# EUROPÄISCHE PATENTSCHRIFT

(11) **EP 0 459 219 B1**
(45) Veröffentlichungstag und Bekanntmachung des Hinweises auf die Patenterteilung: **27.10.1993**
(21) Anmeldenummer: 91107852.5
(22) Anmeldetag: 15.05.1991
(51) Int. Cl.: B60J 1/17, B60J 10/00

(54) **Anordung zur Halterung eines Fensterführungsprofiles**
Arrangement for fixing a guiding profile of a window
Arrangement pour fixer un profil de guidage de fenêtre

(30) Priorität: 01.06.1990 DE 4017813
(43) Veröffentlichungstag der Anmeldung: 04.12.1991
(73) Patentinhaber: METZELER Automotive Profiles GmbH, D-88131 Lindau (DE)
(72) Erfinder: Kranz, Jürgen, W-8990 Lindau/Bodensee (DE); Seegert, Gerd-Lutz, W-8990 Lindau/Bodensee (DE)
(74) Vertreter: Seibert, Hannelore

(56) Entgegenhaltungen:
- DE-A- 3 442 241
- DE-A- 3 929 182

## Beschreibung

Die Erfindung bezieht sich auf eine Anordnung zur Halterung eines Fensterführungsprofils am Türrahmen eines Kraftfahrzeuges, bei der auf den kastenförmigen Rahmen der Tür das im Querschnitt U-förmig ausgebildete Fensterführungsprofil mit einer seitlich abragenden Dichtlippe zur Scheibe und zum Dachraum hin seitlich aufgeschoben ist.

Ein derartiges Fensterführungsprofil und seine entsprechende Halterung ist beispielsweise aus der EP-A-0 182 318 oder DE-A-3 929 182 bekannt. Hierbei weist der die Fensteröffnung umschließende Rahmen der Kraftfahrzeugtür zwei nach außen ragende Stege auf, auf die das entsprechend geformte Fensterführungsprofil aufgesteckt wird.

Eine derartige Befestigungsart ist aber mit Schwierigkeiten verbunden, insbesondere wenn das aufzuschiebende Profil oder der Türrahmen oder beide größere Toleranzen aufweisen, so daß das Fensterführungsprofil nur unzureichend festgelegt ist oder nicht genau die vorgeschriebene Lage in Bezug auf Fensterscheibe und/oder Türrahmen einnimmt. Außerdem muß das Profil sehr genau positioniert auf den Türrahmen aufgeschoben werden, damit die entsprechenden Teile positionsgenau ineinander eingreifen.

Demgegenüber liegt der vorliegenden Erfindung die Aufgabe zugrunde, eine Anordnung anzugeben, mit dem ein solches Fensterführungsprofil leicht und schnell montiert werden kann, ohne daß vorher eine genaue Zentrierung erforderlich ist, wobei gleichzeitig auch größere Toleranzen ausgeglichen werden können.

Zur Lösung dieser Aufgabe ist erfindungsgemäß vorgesehen, daß der kastenförmige Rahmen der Tür auf seiner Oberseite einen in Längsrichtung verlaufenden Spalt und das U-förmige Profil auf seiner Innenseite einen stegförmigen Ansatz derart aufweisen, daß der Ansatz nach Aufschieben des Profils in den freien Spalt des Türrahmens einrastet.

Damit kann das den Türrahmen auf seiner Außenseite umschließende Profil ohne genaue Zentrierung einfach aufgeschoben werden und fixiert sich selbst, da durch den einrastenden Steg einmal das Profil genau in seiner Lage positioniert wird, zum anderen aber das Profil nicht von sich aus wieder herausrutschen kann.

Zur besseren Fixierung ist es dabei zweckmäßig, wenn der stegförmige Ansatz zur Außenseite hin eine vertikale Flanke und zur Türinnenseite eine schräg geneigte Flanke aufweist, damit das Profil leichter aufgeschoben werden kann.

Für die exakte Fixierung am Rahmen sollte der Spalt nur geringfügig breiter als die Basisbreite des stegförmigen Ansatzes sein.

Ferner ist es zweckmäßig, wenn der stegförmige Ansatz eine Hohlkammer aufweist, um ein leichteres Zusammendrücken beim Aufschieben zu ermöglichen.

Zur Versteifung kann das U-förmige Profil eine metallische Armierung aufweisen.

Zweckmäßigerweise ist das Profil selbst so ausgestaltet, daß von der Profilbasis eine bei geschlossener Scheibe an dieser dicht anliegende Dichtlippe ausgeht und zum Dachbereich hin auf den oberen Profilschenkel ein dreieckförmiges Hohlprofil anextrudiert ist.

Ergänzend zu dem beschriebenen Fensterführungsprofil kann zusätzlich auf der Scheibeninnenseite ein U-förmiges Dichtungsprofil auf die parallel zur Scheibe verlaufenden Blechflansche des Türrahmens aufgeklemmt sein, das mit einem seitlich anextrudierten Hohlprofil gegen die geschlossene Scheibe abdichtet und dessen innenliegender Schenkel mit einem verlängernden Ansatz in eine seitliche Ausnehmung im unteren Schenkel des Fensterführungsprofils eingreift. Durch dieses Ineinandergreifen der Schenkel des Dichtungsprofils und des Fensterführungsprofils ist darüber hinaus noch eine zweite Lagerarretierung für das Fensterführungsprofil selbst gegeben.

Anhand einer schematischen Zeichnung ist Aufbau und Funktionsweise eines Ausführungsbeispiels nach der Erfindung näher erläutert.

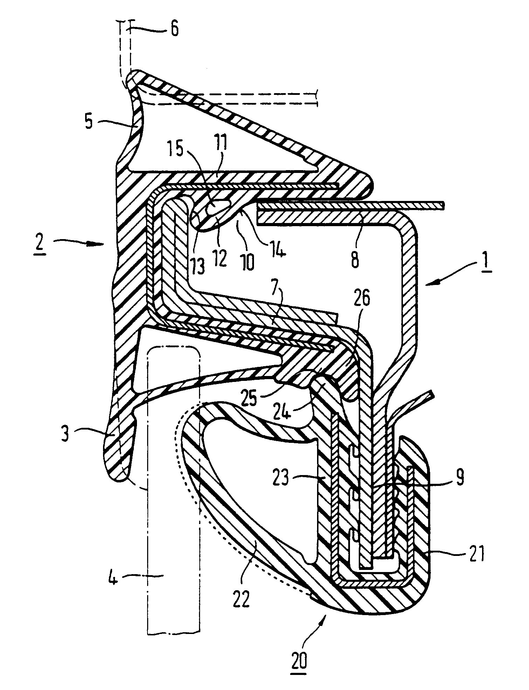

Dabei zeigt die einzige Figur einen Querschnitt durch den Türrahmen unterhalb des Dachbereiches mit den aufgesetzten Profilen.

Wie man aus der Zeichnung ersieht, weist die Fahrzeugtür im oberen Bereich einen kastenförmigen Rahmen 1 auf, auf den von außen das U-förmige Fensterführungsprofil 2 aufgeschoben ist, das nach unten über eine Dichtlippe 3 gegen die Fensterscheibe 4 und nach oben über ein Hohlprofil 5 gegen die Dachunterkante 6 abdichtet.

Der Türrahmen 1 besteht nun aus zwei kastenförmig zueinander gebogenen Blechen 7 und 8, die am innenliegenden Ende zu einem gemeinsamen Flansch 9 zusammengeführt sind. Die beiden Bleche 7 und 8 bilden nun nicht, wie bisher üblich, einen geschlossenen Rahmen, sondern lassen auf der Oberseite einen Spalt 10 frei, in dem das horizontal verlaufende Blechende 8 im Abstand vor dem vertikal hochgebogenen Bereich des Bleches 7 endet und damit einen in Längsrichtung der Tür verlaufenden Spalt 10 freiläßt.

Entsprechend der Lage dieses Spaltes 10 weist der obere Schenkel 11 des Fensterführungsprofils 2 auf seiner Innenseite einen stegförmigen Ansatz 12 mit einer vertikal zum Schenkel 11 verlaufenden Vorderflanke 13 und einer schräg geneigten Rückflanke 14 auf.

Wenn jetzt das Fensterführungsprofil 2 auf den Türrahmen 1 von vorn her aufgeschoben wird, was ohne exakte Zentrierung möglich ist, wird dann der Ansatz 12 in den Spalt 10 zwischen den beiden Blechen 7 und 8 einrasten und aufgrund seiner als Widerhaken wirkenden Vorderkante 13 dort gegen ein Herausziehen fest arretiert sein.

Zum leichteren Aufschieben kann der Ansatz 12 noch eine Hohlkammer 15 aufweisen, damit er sich leichter über die vordere Kante des Bleches 7 schieben läßt.

Bei dem dargestellten Ausführungsbeispiel ist zusätzlich noch auf den innenliegenden Flansch 9 des Türrahmens 1 ein Dichtungsprofil 20 mit seinem U-förmigen Klemmbereich 21 aufgeschoben. Dieses Dichtungsprofil 20 weist zur Scheibe hin ein anextrudiertes Hohlprofil 22 auf, mit dem es gegen die geschlossene Scheibe 4 abdichtet. Der innenliegende Schenkel 23 dieses Profils weist ferner an seinem freien Ende einen verlängernden Ansatz 24 auf, der in eine entsprechende Ausnehmung 25 am freien Ende des unteren Schenkels 26 des Fensterführungsprofils 2 einrastet. Durch diese Rastung wird auch die Unterseite des Fensterführungsprofils 2 zusätzlich gehaltert und daran gehindert, nach außen auszuweichen oder leicht herausgezogen zu werden.

Mit der beschriebenen Anordnung und Gestaltung der Profile und des Türrahmens ist es also möglich, ein entsprechendes Fensterführungsprofil ohne genaue Zentrierung auf den Türrahmen aufzuschieben, wo er dann fest arretiert ist und auch größere Toleranzen auszugleichen vermag.

## Patentansprüche

1. Anordnung zur Halterung eines Fensterführungsprofils (2) am Türrahmen (1) eines Kraftfahrzeuges, bei der auf den kastenförmigen Rahmen (1) der Tür das im Querschnitt U-förmig ausgebildete Fensterführungsprofil (2) mit seitlich abragenden Dichtlippen (3) zur Scheibe und zum Dachholm hin seitlich aufgeschoben ist, dadurch gekennzeichnet, daß der kastenförmige Rahmen (1) der Tür auf seiner Oberseite einen in Längsrichtung verlaufenden Spalt (10) und das U-förmige Fensterführungsprofil (2) auf seiner Innenseite einen stegförmigen Ansatz (12) derart aufweisen, daß der Ansatz (12) nach Aufschieben des Profils (2) in den Spalt (10) des Türrahmens (1) einrastet.

2. Anordnung nach Anspruch 1, dadurch gekennzeichnet, daß der stegförmige Ansatz (12) zur Türaußenseite hin eine vertikale Flanke (13) und zur Türinnenseite hin eine schräg geneigte Flanke (14) aufweist.

3. Anordnung nach Anspruch 1 oder 2, dadurch gekennzeichnet, daß der Spalt (10) geringfügig breiter als die Basisbreite des stegförmigen Ansatzes (12) ist.

4. Anordnung nach Anspruch 2, dadurch gekennzeichnet, daß der stegförmige Ansatz (12) eine Hohlkammer (15) aufweist.

5. Anordnung nach einem der Ansprüche 1 bis 4, dadurch gekennzeichnet, daß das U-förmige Profil (2) eine metallische Armierung (16) aufweist.

6. Anordnung nach Anspruch 5, dadurch gekennzeichnet, daß von der Profilbasis (2) eine bei geschlossener Scheibe (4) an dieser dicht anliegenden Dichtlippe (3) ausgeht und zum Dachbereich (6) hin auf dem oberen Profilschenkel (11) ein dreieckförmiges Halteprofil (5) anextrudiert ist.

7. Anordnung nach Anspruch 1, dadurch gekennzeichnet, daß auf der Scheibeninnenseite ein U-förmiges Dichtungsprofil (20) auf die parallel zur Scheibe (4) verlaufenden Blechflansche (9) des Türrahmens (1) aufgeklemmt ist, das mit einem seitlich anextrudierten Hohlprofil (22) gegen die geschlossene Scheibe (4) abdichtet und dessen innenliegender Schenkel (23) mit einem verlängernden Ansatz (24) in eine seitliche Ausnehmung (25) im unteren Schenkel (26) des Fensterführungsprofils (2) eingreift.

## Claims

1. Arrangement for fixing a window guide profile (2) to the door frame (1) of a motor vehicle, in which the window guide profile (2), which is U-shaped in cross-section, with sealing lips (3) projecting laterally towards the windowpane and towards the roof rail, is slid from the side onto the box-shaped frame (1) of the door, characterised in that the upper side of the box-shaped frame (1) of the door has a gap (10) extending in the longitudinal direction and the inside of the U-shaped window guide profile (2) has a tooth-shaped stop (12) such that, after the profile (2) is slid on, the stop (12) engages in the gap (10) of the door frame (1).

2. Arrangement according to claim 1, characterised in that the tooth-shaped stop (12) has a vertical flank (13) facing the outside of the door and an inclined flank (14) facing the inside of the door.

3. Arrangement according to claim 1 or 2, characterised in that the gap (10) is slightly wider than the base width of the tooth-shaped stop (12).

4. Arrangement according to claim 2, characterised in that the tooth-shaped stop (12) has a hollow space (15).

5. Arrangement according to one of claims 1 to 4, characterised in that the U-shaped profile (2) has a metal reinforcement (16).

6. Arrangement according to claim 5, characterised in that a sealing lip (3) lying close against the windowpane (4) when said windowpane (4) is closed originates from the profile base (2) and a triangular retaining profile (5) is extruded onto the upper limb of the profile (11) towards the roof area (6).

7. Arrangement according to claim 1, characterised in that a U-shaped sealing profile (20) is clipped onto the sheet metal flange (9) of the door frame (1) extending parallel to the windowpane (4) on the inside of the windowpane, which, by means of a hollow profile (22) extruded at the side, seals the closed windowpane (4), and the internal limb (23) of which engages, by means of an extending stop (24), in a lateral recess (25) in the lower limb (26) of the window guide profile (2).

## Revendications

1. Dispositif pour fixer un profilé de guidage de fenêtre (2) sur le cadre (1) d'une portière d'un véhicule automobile, dans lequel le profilé de guidage de fenêtre (2), réalisé en forme de U en coupe transversale, est engagé latéralement, avec des lèvres d'étanchéité (3) qui font saillie latéralement, sur le cadre en forme de bolte (1) de la portière, en direction de la fenêtre et du longeron de toit, caractérisé par le fait que le cadre en forme de boîte (1) de la portière possède, sur son côté supérieur, une fente (10) qui s'étend dans la direction longitudinale, et le profilé de guidage de fenêtre (2) en forme de U possède, sur sa face intérieure, une partie saillante (12) en forme de barrette, la réalisation étant telle qu'après engagement du profilé (2), la partie saillante (12) s'encliquette dans la fente (10) du cadre (1) de la porte.

2. Dispositif suivant la revendication 1, caractérisé par le fait que la partie saillante (12) en forme de barrette possède un flanc vertical (13) en direction de la face extérieure de la portière et un flanc incliné obliquement (14) en direction de la face intérieure de la portière.

3. Dispositif suivant la revendication 1 ou 2, caractérisé par le fait que la fente (10) est d'une largeur légèrement supérieure à la largeur de base de la partie saillante (12) en forme de barrette.

4. Dispositif suivant la revendication 2, caractérisé par le fait que la partie saillante (12) en forme de barrette possède une chambre creuse (15).

5. Dispositif suivant l'une des revendications 1 à 4, caractérisé par le fait que le profilé en forme de U (2) possède une armature métallique (16).

6. Dispositif suivant la revendication 5, caractérisé par le fait qu'une lèvre d'étanchéité (3), qui s'applique de façon étanche contre la vitre (4), lorsque cette dernière est fermée, s'étend à partir de la base du profilé (2) et qu'un profilé triangulaire de fixation (6) est co-extrudé sur la branche supérieure (11) du profilé, pour s'étendre en direction de la partie de toit (6).

7. Dispositif suivant la revendication 1, caractérisé par le fait que, sur le côté intérieur de la vitre, sur la bride en tôle (9), qui est parallèle à la vitre (4), du cadre (1) de la portière est fixé par blocage un profilé d'étanchéité en forme de U (20), qui, avec un profilé creux (22) co-extrudé latéralement, établit l'étanchéité par rapport à la vitre (4) fermée et dont la branche intérieure (23) s'engage, par une partie saillante prolongée (24), dans un évidement latéral (25) ménagé dans la branche inférieure (26) du profilé de guidage de fenêtre (2).
